# EUROPÄISCHE PATENTSCHRIFT

(11) **EP 1 600 671 B1**
(45) Veröffentlichungstag und Bekanntmachung des Hinweises auf die Patenterteilung: **14.10.2009**
(21) Anmeldenummer: 05007477.2
(22) Anmeldetag: 06.04.2005
(51) Int. Cl.: F16J 15/08

(54) **Zylinderkopfdichtung**
Cylinder head gasket
Joint de culasse

(30) Priorität: 29.05.2004 DE 102004026395
(43) Veröffentlichungstag der Anmeldung: 30.11.2005
(73) Patentinhaber: ElringKlinger AG, 72581 Dettingen (DE)
(72) Erfinder: Diez, Armin, 73252 Lenningen (DE); Gruhler, Tobias, 72793 Pfullingen (DE); Werz, Ulrich, 72581 Dettingen (DE); Schenk, Peter, 72531 Hohenstein (DE)
(74) Vertreter: Hoeger, Stellrecht & Partner Patentanwälte

(56) Entgegenhaltungen:
- EP-A- 1 350 992
- DE-A- 10 224 856
- US-A- 5 582 415
- US-A1- 2003 080 514

## Beschreibung

Die Erfindung betrifft eine zumindest im wesentlichen metallische Zylinderkopfdichtung.

Die derzeit gängigen metallischen Zylinderkopfdichtungen haben eine Dichtungsplatte, die im wesentlichen von einer einzigen Blechlage aus Federstahlblech oder von mehreren aufeinandergeschichteten Stahlblechlagen gebildet wird, von denen mindestens eine Lage aus Federstahlblech besteht. Um die abzudichtenden Brennraumöffnungen und Fluidöffnungen (letztere für Kühlmittel und/oder Motoröl) herum weist die Stahlblechlage oder mindestens eine der Stahlblechlagen eingeprägte Abdichtsicken auf, welche in Richtung senkrecht zur Dichtungsplatte federelastisch verformbar sind, um so um die abzudichtenden Öffnungen der Zylinderkopfdichtung herum die für die Abdichtwirkung erforderliche Pressung aufrechtzuerhalten, wenn sich beim Anziehen der Zylinderkopfschrauben und im Motorbetrieb die vor der Dichtungsmontage ebenen Motorbauteil-Dichtflächen von Zylinderkopf und Motorblock verformen und keine ebenen Flächen mehr darstellen. Derartige metallische Zylinderkopfdichtungen ergeben sich z. B. aus dem US-Patent 5 582 415, aus der elastisch verformbare Sicken bekannt sind.

Ein völlig anderes Funktionsprinzip einer im wesentlichen metallischen Zylinderkopfdichtung geht aus der gattungsgemäßen EP-0 485 693-B1 bzw. dem entsprechenden US-Patent 5 391 333 hervor. Danach weist eine Zylinderkopfdichtung eine einstückige metallische Dichtungsplatte auf, deren den Motorbauteil-Dichtflächen zugekehrte Hauptoberflächen eine ganz bestimmte Topographie aufweisen, deren Gestaltung folgende Überlegung zugrundeliegt: Für die Funktion einer Zylinderkopfdichtung können der Motorblock (Kurbelgehäuse) sowie der Zylinderkopf nicht als absolut steife Bauteile betrachtet werden; vielmehr führen das Anziehen der Zylinderkopfschrauben und die während des Motorbetriebs wechselnden Gasdrücke in den Brennräumen zu Durchbiegungen dieser Motorbauteile, d. h. letztlich dazu, daß der von den Motorbauteil-Dichtflächen begrenzte, die Zylinderkopfdichtung aufnehmende und durch letztere abzudichtende Dichtspalt nicht die Gestalt einer dünnen, planparallelen Platte behält. Auf die Topographie der im Motorbetrieb den Dichtspalt begrenzenden Motorbauteil-Dichtflächen hat aber auch noch die örtlich unterschiedliche Bauteilsteifigkeit dieser beiden Motorbauteile in an deren Dichtflächen angrenzenden Bereichen einen Einfluß. Die Formgebung der Dichtungsplatte der Zylinderkopfdichtung nach der EP-0 485 693-B1 beruht nun auf dem Grundgedanken, die Form der Dichtungsplatte der Zylinderkopfdichtung in den für die Abdichtung wirksamen Bereichen an die Topographie der Motorbauteil-Dichtflächen anzupassen, wie sie nach dem Anziehen der Zylinderkopfschrauben, d. h. nach dem Einbau der Zylinderkopfdichtung, gegeben ist, und die für die Aufrechterhaltung der Abdichtung im Motorbetrieb erforderlichen elastischen Bauteilverformungen nicht an bzw. in der Zylinderkopfdichtung auftreten zu lassen, sondern vielmehr an bzw. in den Motorbauteilen Motorblock und Zylinderkopf, so daß sich die Dichtungsplatte der Zylinderkopfdichtung aus einem Werkstoff herstellen läßt, welcher beim Anziehen der Zylinderkopfschrauben und im Motorbetrieb standfest, d. h. nicht dickenverformbar ist. Dieses Grundkonzept für die Gestaltung einer Zylinderkopfdichtung schließt natürlich nicht aus, daß die Dichtungsplatte mit einer Kunststoffbeschichtung versehen ist, welche z. B. der sogenannten Mikroabdichtung dient und sich an Oberflächenrauhigkeiten der Motorbauteil-Dichtflächen anpassen kann.

Es gibt nun Einsatzfälle von Zylinderkopfdichtungen, in denen eine Dichtung mit einer topographisch gestalteten und zumindest in ihren der Abdichtung dienenden Bereichen als starr zu betrachtenden Dichtungsplatte nicht zu optimalen Ergebnissen führt: Vor allem moderne Leichtbau-Dieselmotoren lassen sich mit einer streng nach der Lehre der EP-0 485 693-B1 gestalteten Zylinderkopfdichtung nicht sowohl bei kaltem, als auch bei warmem Motor zuverlässig abdichten, und zwar aus folgendem Grund: Wird die Zylinderkopfdichtung so gestaltet, daß der Motor im kalten Zustand dicht ist, führen die im Zuge des Erreichens der Motor-Betriebstemperatur sich in Richtung senkrecht zum Dichtspalt zwischen Zylinderkopf und Motorblock am stärksten ausdehnenden Zylinderrohre (die die Brennräume im Motorblock umschließenden Wandbereiche) dazu, daß der Zylinderkopf angehoben wird und im Abstand von den Brennraumöffnungen der Zylinderkopfdichtung von letzterer abhebt, so daß die die Zylinderkopfdichtung durchquerenden Schmieröl- und Kühlmitteldurchgänge undicht werden. Außerdem führen die bei derartigen Motoren stark unterschiedlichen Temperaturausdehnungskoeffizienten der Werkstoffe von Motorblock (üblicherweise Grauguß) und Zylinderkopf (Leichtmetallegierungen) bei den im Motorbetrieb unvermeidlichen Temperaturänderungen des Motors zu verhältnismäßig großen Schiebebewegungen der Motorbauteil-Dichtflächen von Zylinderkopf und Motorblock relativ zueinander und relativ zur Zylinderkopfdichtung in der Ebene des durch die letztere abzudichtenden Dichtspalts und damit zu schädlichen Verschleißerscheinungen vor allem am Zylinderkopf.

Durch die Erfindung wird nun eine Zylinderkopfdichtung vorgeschlagen, welche das vorstehend geschilderte Abdichtproblem beseitigt und dennoch die wesentlichen Vorteile einer Zylinderkopfdichtung mit einer einlagigen metallischen Dichtungsplatte mit um deren Brennraumöffnungen herum standfesten, d. h. nicht höhenverformbaren Abdichtbereichen gemäß der EP-0 485 693 B1 aufweist.

Die Erfindung betrifft also eine Zylinderkopfdichtung mit den Merkmalen des Anspruchs 1.

Bei der Entwicklung der erfindungsgemäßen Zylinderkopfdichtung ging man von der Überlegung aus, daß es sich bei den für die Abdichtung kritischsten Stellen um die Bereiche um die Brennraumöffnungen herum handelt, da dort das unter den höchsten Drücken stehende Medium abzudichten ist und die höchsten, auf die Dichtung einwirkenden Flächenpressungen erforderlich sind, so daß die Zylinderkopfschrauben so stark angezogen werden müssen, daß die die Brennraumöffnungen umschließenden Erhebungen der Dichtung in allen Betriebszuständen des Motors hinreichend gepreßt werden. Hingegen reichen für die Abdichtung um die Fluidöffnungen herum in ihrer Höhe zumindest innerhalb gewisser Grenzen elastisch verformbare Sicken, mit denen sich vermeiden läßt, daß im Zuge der Erwärmung des Motors die Abdichtwirkung um die Fluidöffnungen herum verloren geht.

Wenn vorstehend und in den Patentansprüchen von der Topographie des Dichtspalts die Rede ist, welcher sich bei zwischen den Motorbauteil-Dichtflächen eingespannter Zylinderkopfdichtung ergibt und von diesen Motorbauteil-Dichtflächen definiert wird, so kann hierunter die Dichtspalt-Topographie bei stillstehendem, kaltem Motor oder die Dichtspalt-Topographie bei mit seiner vollen Leistung (Vollast) arbeitenden Motor oder die Dichtspalt-Topographie bei unter Teillast arbeitendem Motor verstanden werden, je nach dem, bei welchem Zustand des Motors die Abdichtung des Dichtspalts mit Hilfe der Zylinderkopfdichtung am kritischsten ist. Da jede Zylinderkopfdichtung für einen ganz bestimmten Motor konstruiert wird, so daß dem Dichtungskonstrukteur dieser Motor einschließlich der für die Motorbauteile verwendeten Werkstoffe bekannt ist, lassen sich die (zumindest überwiegend elastischen) Verformungen der Motorbauteil-Dichtflächen unter der Einwirkung von beim Einspannen der Zylinderkopfdichtung auftretenden Pressungskräften sowie die temperaturbedingten Wärmedehnungen der Motorbauteile und die dadurch verursachten Verformungen der Motorbauteil-Dichtflächen durch die bekannte Finite-Elemente-Methode berechnen, was bedeutet, daß sich auch die Dichtspalt-Topographie und die zwischen den Motorbauteil-Dichtflächen und der Zylinderkopfdichtung auftretenden, lokal unterschiedlichen Pressungskräfte für jeden Betriebszustand des Motors berechnen lassen. Infolgedessen läßt sich für einen dem Dichtungskonstrukteur vorgegebenen bestimmten Motor auch berechnen, in welchem Betriebszustand dieses Motors die Abdichtung des Dichtspalts zwischen den Motorbauteil-Dichtflächen durch die Zylinderkopfdichtung am kritischsten ist, so daß sich das Höhenprofil des Brennraum-Dichtelements einer erfindungsgemäßen Zylinderkopfdichtung für diesen besonders kritischen Betriebszustand durch die Finite-Elemente-Methode ermitteln läßt. Für einen Motor, bei dem die Dichtspalt-Topographie in für die Dichtspalt-Abdichtung nicht zu vernachlässigendem Umfang durch die Wärmedehnung der Motorbauteile im Motorbetrieb verändert wird, kann es sich infolgedessen empfehlen, das Höhenprofil des Brennraum-Dichtelements einer erfindungsgemäßen Zylinderkopfdichtung entsprechend einer Dichtspalt-Topographie auszubilden, die ungefähr einem Mittelwert aus der Dichtspalt-Topographie des kalten Motors und der Dichtspalt-Topographie des unter Vollast arbeitenden, heißen Motors entspricht, wobei Abweichungen von bis zu ± 25 % vom exakten Mittelwert als unter die Erfindung fallend angesehen werden sollen.

Im Zusammenhang mit der vorstehenden Definition der Erfindung ist auf folgendes hinzuweisen: Anstelle eines einzigen Zylinderkopfs könnte auch für jeden einzelnen Zylinder eines Mehrzylindermotors jeweils ein Zylinderkopf vorgesehen sein, wie dies bei Nutzfahrzeugmotoren häufig der Fall ist. Die erwähnten Motorbauteil-Dichtflächen können nicht nur vom Motorblock und mindestens einem Zylinderkopf gebildet werden, sondern z. B. auch noch von einem Kettenkastenteil oder mehreren Kettenkastenteilen - in diesem Fall weist die Zylinderkopfdichtung eine Kettenkastenöffnung auf, um die herum gleichfalls mit einer in ihrer Höhe elastisch verformbaren Sicke abgedichtet werden kann. Bei den Sicken kann es sich um sogenannte Vollsicken mit ungefähr U-förmigem oder kreisbogenförmigem Querschnitt oder um sogenannte Halbsicken handeln, deren Querschnitt einer Stufe oder einem in die Länge gezogenen Z entspricht. Vorteilhafterweise wird man die die Brennraumöffnungen umschließenden Erhebungen nicht nur auf einer Seite der Zylinderkopfdichtung vorsehen, sondern auf beiden Seiten der Dichtung, so daß dann dort das Dickenprofil der Dichtung entsprechend der Dichtspalt-Topographie gestaltet ist. Die Dichtungsplatte kann ein- oder beidseitig ganz oder bereichsweise mit einer Kunststoffbeschichtung versehen sein und außer der sich über die ganze Dichtungsplatte erstreckenden Stahlblechlage eine oder mehrere weitere Blechlagen aufweisen, die sich nur über einen Teil der Dichtungsplatte erstrecken. Wenn vorstehend davon die Rede ist, daß die an der Dichtungsplatte vorgesehenen Erhebungen einen metallischen Grundkörper aufweisen, kann es sich bei letzterem um ein von der Stahlblechlage unterschiedliches Teil oder um einen durch Prägen geformten Bereich der Stahlblechlage handeln, ebenso aber auch um einen Bereich der Stahlblechlage, auf welchen eine zur Bildung der Erhebung führende Auflage aufgebracht wurde. Schließlich sei noch bemerkt, daß der erwähnte Grundkörper um die Brennraum-Öffnung herum nicht überall druckfest sein muß, sondern in kleinen Bereichen innerhalb enger Grenzen elastisch und/oder plastisch höhenverformbar sein kann, obwohl solche Ausführungsformen nicht bevorzugt werden. Die Dichtspalttopographie kann am metallischen Grundkörper selbst ausgebildet sein, grundsätzlich ist es aber auch möglich, diesen mit einer standfesten Beschichtung zu versehen, welche die Dichtungsdichtfläche bildet und deren Dicke entsprechend der Dichtspalttopographie variiert. Es ist schließlich auch als unter die Erfindung fallend anzusehen, daß die Dichtungsplatte noch mindestens eine weitere Metallblechlage aufweist, die sich über die ganze Dichtungsplatte oder nur über einen Teil oder Teile der Dichtungsplatte erstreckt, obwohl solche Dichtungen nicht als bevorzugte Ausführungsformen der Erfindung anzusehen sind.

Weil bei montierter Zylinderkopfdichtung im Motorbetrieb um die Brennraumöffnungen der Dichtung herum das höchste Risiko für das Auftreten schädlicher Verschleißerscheinungen an den Motorbauteilen, vor allem am Zylinderkopf, und an der Zylinderkopfdichtung besteht, hervorgerufen vor allem durch Schiebebewegungen aufgrund stark unterschiedlicher Temperaturausdehnungskoeffizienten der Werkstoffe von Zylinderkopf und Motorblock in Kombination mit hohen Flächenpressungen zwischen den Motorbauteil-Dichtflächen und der Zylinderkopfdichtung, und zwar gerade bei einer erfindungsgemäßen Zylinderkopfdichtung mit nicht höhenverformbaren Brennraum-Dichtelementen, wird erfindungsgemäß vorgeschlagen, den Grundkörper eines Brennraum-Dichtelements bzw. der Brennraum-Dichtelemente im Bereich der Dichtungs-Dichtfläche mit Antireibverschleißmitteln zu versehen, welche entweder eine leichte Verschiebbarkeit der gegeneinander anliegenden Bereiche der Dichtung und insbesondere des Zylinderkopfs gewährleisten oder Schiebebewegungen zwischen der Dichtung und der Dichtfläche mindestens des Zylinderkopfs minimieren oder ganz verhindern. Dieses Ziel läßt sich erreichen, indem man den Grundkörper eines Brennraum-Dichtelements im Bereich der Dichtungs-Dichtfläche mit einer Gleitschicht versieht oder aber mit einer die Gleitreibung gegenüber der benachbarten Motorbauteil-Dichtfläche erhöhenden Beschichtung, und schließlich ist es auch möglich, daß der Grundkörper im Bereich der Dichtungs-Dichtfläche eine Oberflächenprofilierung zur Verhinderung einer Gleitbewegung gegenüber der benachbarten Motorbauteil-Dichtfläche aufweist, wobei die Oberflächenprofilierung vorzugsweise von die Brennraumöffnung ringförmig umschließenden Rippen und Rillen gebildet wird, deren Profil z. B. einem Dreieck oder einem Sägezahn entspricht; derartige ringförmige Rippen und/oder Rillen können von den Brenngasen nicht überquert werden. Der Grundkörper kann dabei mit einer die Oberflächenprofilierung nicht einebnenden, der Mikroabdichtung dienenden Beschichtung aus einem elastomeren Material versehen sein, welche den "Verklammerungseffekt" der Oberflächenprofilierung natürlich nicht zunichte machen darf.

Die mit der Abdichtsicke bzw. den Abdichtsicken versehene Metallblechlage kann, wie an sich bekannt, insgesamt aus einem Federstahlblech bestehen, es ist aber auch denkbar, ein anderes Stahlblech zu verwenden, die Abdichtsicke einzuprägen und dann das Blech nur im Bereich der Abdichtsicke einer solchen Wärmebehandlung zu unterziehen, daß es im Bereich der Abdichtsicke federelastische Eigenschaften erhält.

Insbesondere bei einem Mehrzylindermotor verzieht sich die Zylinderkopf-Dichtfläche schon beim Anziehen der Zylinderkopfschrauben, und zwar aus folgendem Grund: Üblicherweise liegen die Schraubenöffnungen einer für einen Mehrzylindermotor vorgesehenen Zylinderkopfdichtung unmittelbar vor den zwickelförmigen Bereichen, welche sich zwischen einander benachbarten Brennraumöffnungen ergeben, und die den Schmalseiten der Dichtung benachbarten Schraubenöffnungen liegen an entsprechenden Stellen neben den endständigen Brennraumöffnungen; hieraus ergibt sich, daß die den erwähnten Zwickeln benachbarten Zylinderkopfschrauben jeweils zwei Brennraumöffnungen zugeordnet sind, während die den Schmalseiten der Dichtung benachbarten Zylinderkopfschrauben nur den endständigen Brennraumöffnungen zugeordnet sind mit der Folge, daß die Einspannkräfte für jede endständige Brennraumöffnung drei Zylinderkopfschrauben äquivalent sind, die Einspannkräfte für jede andere Brennraumöffnung jedoch nur zwei Zylinderkopfschrauben. Da außerdem, wie erwähnt, Motorblock und Zylinderkopf nicht als absolut starre Bauteile betrachtet werden können, sind die Einspannkräfte für die Zylinderkopfdichtung im Bereich der Zylinderkopfschrauben am größten und nehmen mit wachsendem Abstand von den Zylinderkopfschrauben ab, da die Motorbauteile zwischen den Zylinderkopfschrauben den durch die Zylinderkopfdichtung auf die Motorbauteil-Dichtflächen ausgeübten Pressungen elastisch auszuweichen versuchen. Hinzu kommen noch Einwirkungen (vor allem auf den Zylinderkopf) von temperaturbedingten Bauteilausdehnungen und von den hohen, in den Brennräumen herrschenden Gasdrücken auf den Zylinderkopf, welche die Tendenz haben, letzteren zwischen den Schmalseitenbereichen der Zylinderkopfdichtung nach oben, d. h. weg vom Motorblock, auszuwölben.

Um derartigen Verzügen der Motorbauteile, insbesondere des Zylinderkopfs, entgegenzuwirken, wird vorgeschlagen, die Dichtungsplatte im Abstand von der Brennraumöffnung bzw. den Brennraumöffnungen und deren Brennraum-Dichtelementen mit wenigstens einer eine Abstützung für den Zylinderkopf und/oder den Motorblock bildenden Erhebung zu versehen, die vorzugsweise ein der Dichtspalttopographie entsprechendes Höhenprofil aufweist. Liegen die Schraubenöffnungen für die Zylinderkopfschrauben in unmittelbarer Nähe der Brennraumdichtelemente, sind derartige Abstütz-Erhebungen im Bereich der Schraubenöffnungen nicht erforderlich, wohl aber im Abstand von den Brennraum-Dichtelementen, insbesondere an der Peripherie der Dichtungsplatte; bei in größeren Abständen von den Brennraum-Dichtelementen liegenden Schraubenöffnungen werden Abstütz-Erhebungen jedoch vorzugsweise im Bereich der Schraubenöffnungen vorgesehen.

Weitere Merkmale, Vorteile und Einzelheiten der Erfindung ergeben sich aus der nachfolgenden Beschreibung sowie der beigefügten zeichnerischen Darstellung einiger bevorzugter Ausführungsformen der erfindungsgemäßen Zylinderkopfdichtung; in den Zeichnungen zeigen:
- Fig. 1: eine Draufsicht auf einen Abschnitt einer ersten Ausführungsform der erfindungsgemäßen Zylinderkopfdichtung;
- Fig. 1a: einen Bereich der ersten Ausführungsform in einem isometrischen Schnitt entsprechend der Linie 1a-1a in Fig. 1;
- Fig. 2: eine Draufsicht auf einen Abschnitt einer zweiten Ausführungsform der erfindungsgemäßen Zylinderkopfdichtung;
- Fig. 2a: eine der Fig. 1a entsprechende Darstellung der zweiten Ausführungsform entsprechend der Schnittlinie 2a-2a in Fig. 2;
- Fig. 2b: den Ausschnitt "C" aus Fig. 2a in größerem Maßstab;
- Fig. 3: eine der Fig. 1a entsprechende Darstellung einer dritten Ausführungsform und
- Fig. 4: eine der Fig. 3 entsprechende Darstellung einer vierten Ausführungsform.

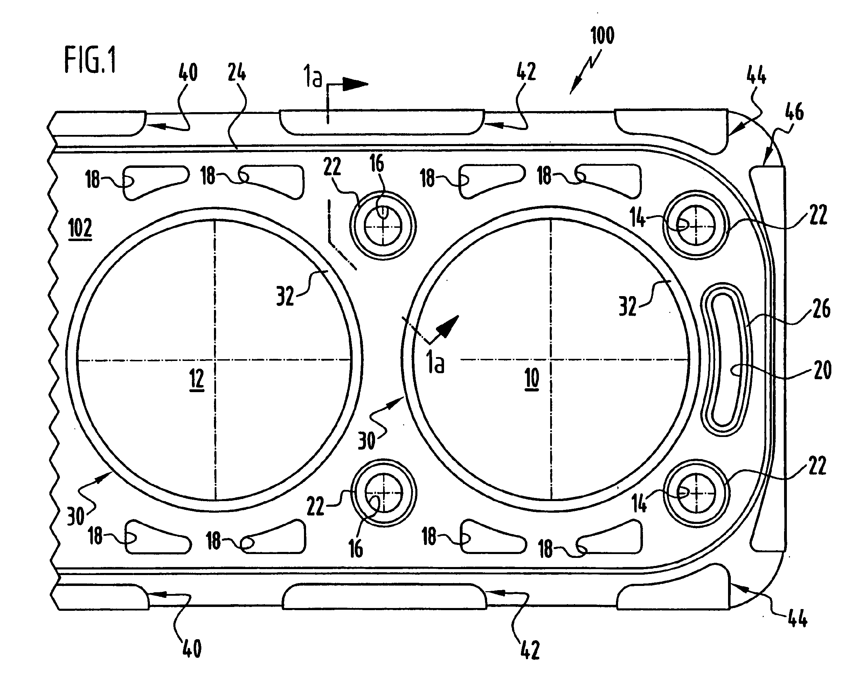

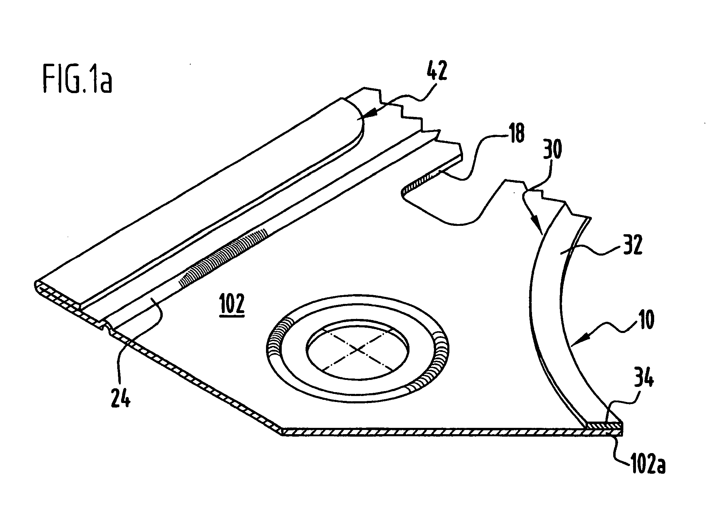

Die in Fig. 1 dargestellte Zylinderkopfdichtung besteht aus einer einzigen, einstückigen Metallblechlage, welche eine Dichtungsplatte 100 bildet, in der mehrere Brennraumöffnungen 10 und 12, Schraubenlöcher 14 und 16, Wasserlöcher 18 sowie mehrere Öllöcher 20 ausgebildet sind - die dargestellte Zylinderkopfdichtung ist für einen Mehrzylinder-Reihenmotor vorgesehen, und die Fig. 1 zeigt nur einen Abschnitt der Dichtung mit zwei Brennraumöffnungen und nur einem Teil der Löcher 14, 16, 18 und 20, wobei die Brennraumöffnung für einen endständigen Zylinder mit 10 bezeichnet wurde, die Brennraumöffnung für einen Zwischenzylinder mit 12, die einer Schmalseite der Dichtungsplatte 100 benachbarten Schraubenlöcher wurden mit 14 bezeichnet, und die jeweils zwei Brennraumöffnungen zugeordneten Schraubenlöcher mit 16.

Wie sich aus den Figuren 1 und 1a ergibt, wird jedes der Schraubenlöcher 14, 16 von einer kreisringförmigen Sicke 22 umschlossen, bei der es sich um eine in die aus Federstahlblech bestehende eigentliche Metallblechlage 102 der Dichtungsplatte 100 eingeprägte höhenelastische Vollsicke handelt. Außerdem ist in die Dichtungsplatte 100 eine gleichfalls höhenelastische (d. h. in ihrer Höhe elastisch verformbare) Wasserabdichtsicke 24 eingeprägt, bei der es sich gleichfalls um eine Vollsicke handeln soll, die in der Nähe der Peripherie der Dichtungsplatte 100 um letztere umläuft, in der Draufsicht auf die Dichtungsplatte 100 ein in sich geschlossenes, ungefähr ovales Gebilde darstellt und alle Brennraumöffnungen, Schraubenlöcher, Wasserlöcher und Öllöcher umschließt. Schließlich sind in die Dichtungsplatte 100 höhenelastische Abdichtsicken 26 eingeprägt, die der Abdichtung der Öllöcher dienen, diese jeweils geschlossen umgeben und gleichfalls als Vollsicken ausgebildet sind, wobei die Fig. 1 nur eine der Abdichtsicken 26 zeigt. Alle Sicken 22, 24 und 26 stehen bei der dargestellten Ausführungsform über ein und dieselbe Hauptoberfläche der Dichtungsplatte 100 vor, d. h. ihre konvexen Seiten sind dem Betrachter der Fig. 1 zugewandt. Es sei schließlich noch erwähnt, daß es sich bei den Sicken 22, 24 und 26 nicht um Vollsicken handeln muß, vielmehr könnte es sich auch um sogenannte Halbsicken handeln, wobei die von einer solchen Halbsicke 22 bzw. 26 gebildete Stufe, ausgehend vom zugehörigen Loch 14 bzw. 16 bzw. 20, im Sickenbereich in Richtung auf den Betrachter der Fig. 1 vorspringt und sich die von der Wasserabdichtsicke 24 gebildete Stufe, ausgehend vom Rand der Dichtungsplatte 100, in Richtung auf den Betrachter der Fig. 1 erhebt.

Um jede der Brennraumöffnungen 10 und 12 herum ist die Dichtungsplatte 100 mit einem kreisringförmigen Brennraum-Dichtelement 30 versehen, das bei der dargestellten ersten Ausführungsform der erfindungsgemäßen Zylinderkopfdichtung aus einem kreisringförmigen Bereich 102a der Blechlage 102 und einem auf diesen Bereich aufgelegten Stahlblechring 34 besteht und infolgedessen auf der dem Betrachter der Fig. 1 zugekehrten Seite der Dichtung eine Erhebung mit einer die betreffende Brennraumöffnung geschlossen umgebenden Dichtungs-Dichtfläche 32 bildet, mit der die Zylinderkopfdichtung gegen die Dichtfläche eines Zylinderkopfs angepreßt werden soll. Der Stahlblechring 34 ist mit der Metallblechlage 102 fest verbunden, insbesondere durch Punktschweißen oder bevorzugt durch eine kontinuierliche Laserschweißnaht, die in sich geschlossen längs des ganzen Brennraum-Dichtelements 30 verläuft. Der Blechring 34 kann auf seiner dem Betrachter der Fig. 1 zugewandten Seite mit einer nicht dargestellten Beschichtung versehen sein - in diesem Fall bildet diese Beschichtung die Dichtungs-Dichtfläche 32 und der vorstehend erwähnte kreisringförmige Bereich 102a der Blechlage 102 zusammen mit dem Stahlblechring 34 einen Grundkörper der Erhebung.

An der Peripherie der Dichtungsplatte 100 ist diese bereichsweise mit Abstütz-Erhebungen 40, 42, 44, 46 versehen, und zwar auf der dem Betrachter der Fig. 1 zugewandten Seite der Dichtungsplatte 100, wobei diese Seite bei eingebauter Zylinderkopfdichtung dem Zylinderkopf zugewandt sein soll. Wie sich aus Fig. 1a ergibt, werden bei der dargestellten Ausführungsform diese Abstütz-Erhebungen durch Blechlappen der die Dichtungsplatte 100 bildenden Stahlblechlage 102 gebildet, welche um 180° umgefalzt und damit auf die Stahlblechlage zurückgefaltet wurden. Diese Abstütz-Erhebungen wirken einer Verformung der vor der Montage ebenen Dichtfläche des Zylinderkopfs entgegen - beim Anziehen der Zylinderkopfschrauben würde sonst die Zylinderkopf-Dichtfläche an der Peripherie der Zylinderkopfdichtung unerwünscht stark nach unten, d. h. in Richtung auf den Motorblock, gezogen werden, und zwar vor allem im Bereich der Schmalseiten des Zylinderkopfs bzw. der Zylinderkopfdichtung, weshalb dort verhältnismäßig lange Abstütz-Erhebungen 46 vorgesehen werden.

Erfindungsgemäß weisen die Dichtungs-Dichtflächen 32 der Brennraum-Dichtelemente 30 ein Höhenprofil auf, welches die Topographie des sich bei montierter Zylinderkopfdichtung ergebenden abzudichtenden Dichtspalts zwischen den Dichtflächen von Zylinderkopf und Motorblock in den Bereichen der Brennraum-Dichtelemente zumindest ungefähr widerspiegelt. Da die Höhenunterschiede dieses Höhenprofils typischerweise maximal ca. 50 µm betragen, läßt sich dieses Höhenprofil zeichnerisch nicht darstellen. Da dem Konstrukteur einer Zylinderkopfdichtung der zu letzterer gehörende Motor samt seinen Werkstoffen und Betriebsparametern stets bekannt ist, lassen sich die Topographien der Dichtflächen des Zylinderkopfs und des Motorblocks, welche den genannten Dichtspalt begrenzen, und damit die Höhenprofile der Dichtungs-Dichtflächen 32 mit der bekannten Finite-Elemente-Methode (FEM) berechnen, und zwar sowohl für den stillstehenden kalten Motor als auch für den Motor unter Teil- oder Vollast - es läßt sich also auch die Topographie der Motorbauteil-Dichtflächen und damit des von diesen begrenzten Dichtspalts sowohl für den kalten als auch für den mit voller Leistung (Vollast) oder unter Teillast arbeitenden Motor berechnen.

Vorzugsweise weisen auch die Abstütz-Erhebungen 40, 42, 44, 46, gegebenenfalls aber auch nur manche oder nur eine dieser Abstütz-Erhebungen, ein der Dichtspalttopographie entsprechendes Höhenprofil auf. Durch diese Höhenprofile werden die mit zunehmenden Abständen von den Schraubenlöchern abnehmenden Schraubenkräfte sowie die örtlich unterschiedlichen Bauteilsteifigkeiten der Motorbauteile, vor allem des Zylinderkopfs, berücksichtigt, und zwar vor allem zu dem Zweck, um die Brennraumöffnungen herum die auf die Brennraum-Dichtelemente einwirkenden Flächenpressungen zu vergleichmäßigen.

Zu der in Fig. 1 dargestellten Ausführungsform der erfindungsgemäßen Zylinderkopfdichtung sei noch bemerkt, daß natürlich auch um die Wasserlöcher 18 herum jeweils eine in sich geschlossene Abdichtsicke vorgesehen sein könnte, will man vermeiden, daß diejenigen Bereiche der Zylinderkopfdichtung, welche zwischen den Brennraum-Dichtelementen 30, der Wasserabdichtsicke 24 und den die Schraubenlöcher umschließenden Sicken 22 liegen, vom Kühlwasser geflutet werden. Können Korrosionsprobleme an den Zylinderkopfschrauben und an den diese aufnehmenden Bohrungen in Zylinderkopf und Motorblock ausgeschlossen werden, können die die Schraubenlöcher umschließenden Sicken 22 entfallen.

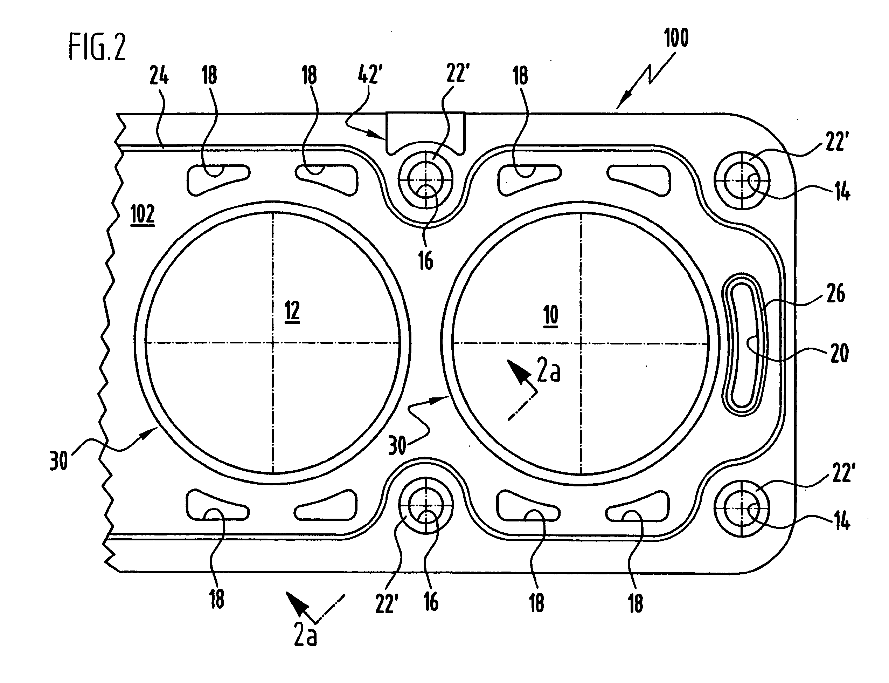

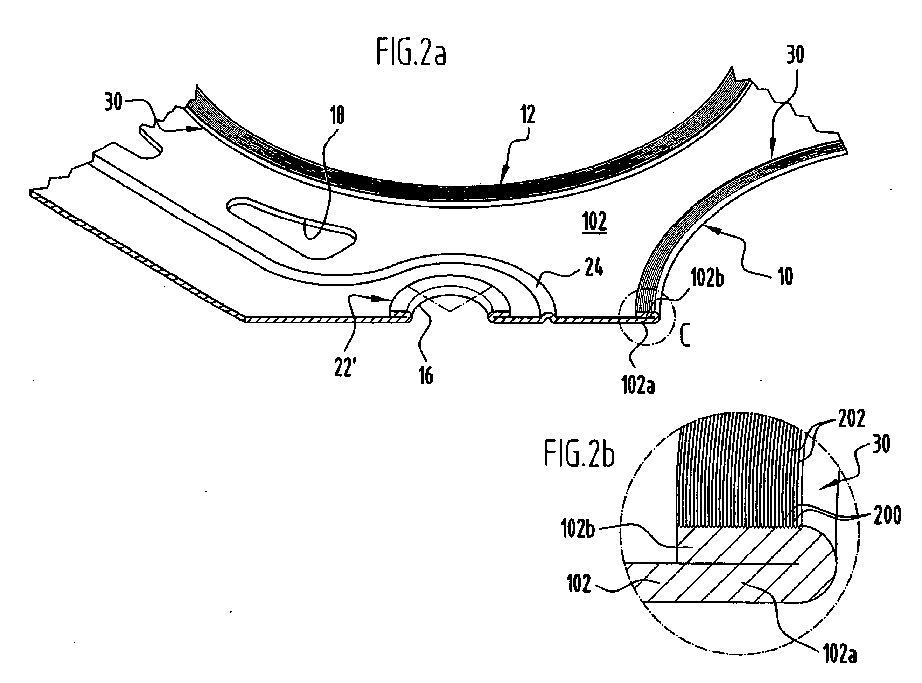

In den Figuren 2 und 2a wurden für Elemente, die auch bei der ersten, in den Figuren 1 und 1a dargestellten Ausführungsform vorhanden sind, dieselben Bezugszeichen wie in den Figuren 1 und 1a verwendet, und die zweite, in den Figuren 2 und 2a dargestellte Ausführungsform wird im folgenden auch nur insoweit beschrieben, als sie von der ersten Ausführungsform gemäß den Figuren 1 und 1a abweicht.

Wie die Fig. 2 erkennen läßt, liegen bei der zweiten Ausführungsform die Schraubenlöcher 14 und 16 außerhalb der Wasserabdichtsicke 24 und weisen von den Brennraum-Dichtelementen 30 größere Abstände auf als die Schraubenlöcher der ersten Ausführungsform. Deshalb sind bei der zweiten Ausführungsform den Schraubenlöchern 14 und 16 Abstütz-Erhebungen 22' zugeordnet, welche bevorzugt ringförmig sind (in einer Draufsicht auf die Zylinderkopfdichtung) und die Schraubenlöcher geschlossen umgeben. Auch die Abstütz-Erhebungen 22' stehen über dieselbe Seite der Dichtungsplatte 100 vor wie die Brennraum-Dichtelemente 30. Wie in Fig. 2 oben in der Mitte angedeutet wurde, könnte die einem Schraubenloch zugeordnete Abstütz-Erhebung aber auch so ausgebildet sein wie die Abstütz-Erhebungen 40, 42, 44, 46 der ersten Ausführungsform, so daß sich eine in Fig. 2 mit 42' bezeichnete Abstütz-Erhebung an der Peripherie der Dichtungsplatte 100 ergibt. In diesem Zusammenhang sei noch darauf hingewiesen, daß bei der zweiten, in Fig. 2 dargestellten Ausführungsform natürlich weitere, der Abstütz-Erhebung 42' entsprechende Abstütz-Erhebungen an anderen Stellen der Dichtungsplatte vorgesehen werden können. Ferner sei in diesem Zusammenhang bemerkt, daß die Abstütz-Erhebungen auch die Form von z. B. metallischen Auflagen haben können, die mit der die Dichtungsplatte 100 bildenden Stahlblechlage 102 z. B. durch Punktschweißen verbunden sind.

Wie die Fig. 2a erkennen läßt, haben bei der zweiten Ausführungsform die den Schraubenlöchern zugeordneten und die Schraubenlöcher ringförmig umschließenden Abstütz-Erhebungen 22' die Form von Umfalzbereichen, d. h. sie wurden dadurch erzeugt, daß um die Schraubenlöcher herum jeweils der Lochrandbereich der Blechlage 102 um 180° umgefalzt und auf die Blechlage zurückgelegt wurde. Es könnte sich aber auch um auf die Stahlblechlage 102 aufgelegte und mit dieser beispielsweise durch Punktschweißen verbundene Blechringe handeln.

Im Zusammenhang mit der zweiten Ausführungsform wurde in Fig. 2b dargestellt, daß an die Stelle des aufgelegten Stahlblechrings 34 ein Umfalzbereich 102b der Stahlblechlage 102 treten und der gegebenenfalls mit einer Beschichtung versehene metallische Grundkörper der Brennraum-Dichtelemente 30 an seiner der benachbarten Motorbauteil-Dichtfläche zugewandten Seite (natürlich bei eingebauter Dichtung) mit Antireibverschleißmitteln versehen werden kann, welche Schiebebewegungen zwischen der Zylinderkopfdichtung und der Motorbauteil-Dichtfläche minimieren oder ganz verhindern. Im Falle der in Fig. 2b dargestellten Ausführungsform haben die Antireibverschleißmittel die Gestalt von in die Oberseite des Brennraum-Dichtelements 30 eingeprägten Rillen 200 und Rippen 202, welche jeweils einen ungefähr dreiecksförmigen Querschnitt haben und die zugehörige Brennraumöffnung in Form von geschlossenen konzentrischen Ringen umschließen. Auf die sich dadurch ergebende Oberflächenprofilierung kann noch eine dünne, der Mikroabdichtung dienende und insbesondere elastomere Beschichtung aufgetragen sein, durch die die Oberflächenprofilierung jedoch nicht eingeebnet werden sollte. An die Stelle der Oberflächenprofilierung kann aber auch eine Beschichtung treten, die die Gleitreibung gegenüber der benachbarten Motorbauteil-Dichtfläche erhöht und z. B. aus einer Kunststoffmatrix besteht, in die feine Korundpartikel eingebettet sind. Alternativ zu den vorstehend beschriebenen Ausführungsformen könnten die Antireibverschleißmittel aber auch aus einer eine Gleitschicht bildenden Beschichtung bestehen, welche eine leichte Verschiebbarkeit der gegeneinander anliegenden Bereiche der Dichtung und der benachbarten Motorbauteil-Dichtfläche gewährleistet und auf diese Weise einen Reibverschleiß verhindert oder zumindest minimiert. Für diesen Zweck denkbar wäre z. B. eine PTFE-Beschichtung.

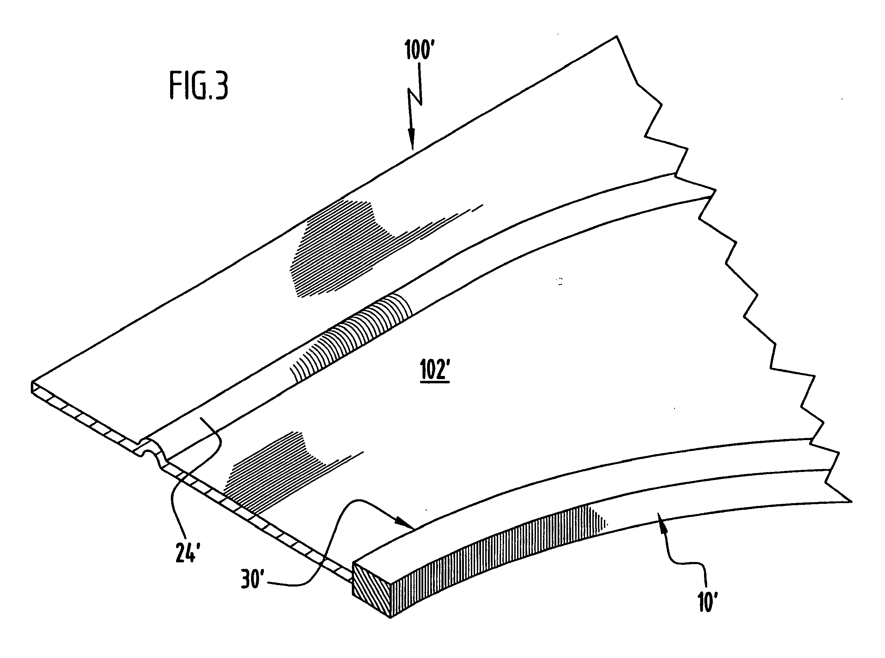

Die in Fig. 3 dargestellte dritte Ausführungsform soll wiederum nur insoweit beschrieben werden, als sie von der ersten Ausführungsform gemäß Fig. 1 abweicht. In Fig. 3 wurde die Dichtungsplatte mit 100' und die Wasserabdichtsicke mit 24' bezeichnet. Ein eine Brennraumöffnung 10' umschließendes Brennraum-Dichtelement 30' hat die Gestalt eines separaten Stahlrings mit insbesondere ungefähr rechteckigem Querschnitt, der in eine ausgestanzte Öffnung der ansonsten die Dichtungsplatte 100' bildenden Stahlblechlage 102' eingelegt und mit letzterer verschweißt ist, und zwar insbesondere durch eine umlaufende und in sich geschlossene Schweißnaht. Bei dieser Ausführungsform springt das Brennraum-Dichtelement 30' zu beiden Seiten der Dichtungsplatte 100' über diese und bildet deshalb auf beiden Seiten der Zylinderkopfdichtung eine Erhebung, und das Brennraum-Dichtelement 30' kann sowohl auf der Oberseite, als auch auf der Unterseite der Zylinderkopfdichtung mit einem der Dichtspalttopographie entsprechenden Höhenprofil versehen sein. Bei dieser Ausführungsform bildet der Stahlring den Grundkörper der beiden genannten Erhebungen.

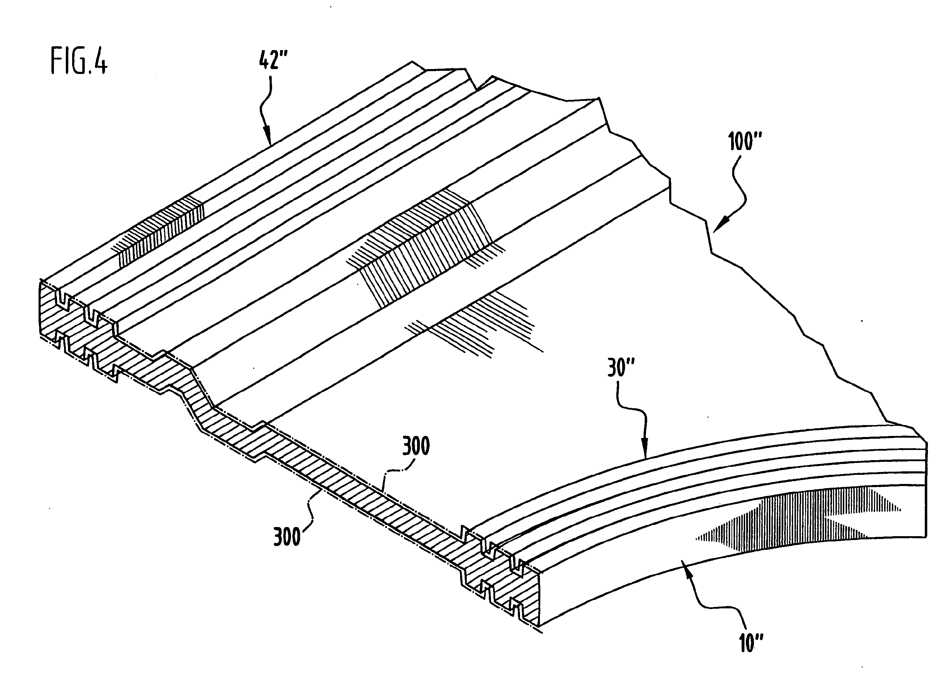

Bei der in Fig. 4 dargestellten Ausführungsform soll die Dichtungsplatte 100" aus einem Stahlblech hergestellt worden sein, welches sich zumindest im Ausgangszustand durch Prägen verformen läßt, um so ein eine Brennraumöffnung 10" ringförmig umschließendes Brennraum-Dichtelement 30" und eine periphere Abstütz-Erhebung 42" sowie eine Abdichtsicke, wie eine Wasserabdichtsicke 24", durch Prägen erzeugen zu können. Weist das zur Herstellung der Dichtungsplatte 100" verwendete Stahlblech dennoch eine für die Funktion der Sicke 24" hinreichende Elastizität auf, bedarf es keiner weiteren Maßnahmen, wie beispielsweise einer Wärmebehandlung, ansonsten kann das Material der Dichtungsplatte 100" in denjenigen Bereichen, in denen die Dichtungsplatte mit elastisch höhenverformbaren Sicken zu versehen ist, einer geeigneten Wärmebehandlung unterzogen werden. Auch bei der in Fig. 4 dargestellten vierten Ausführungsform bildet das Brennraum-Dichtelement 30" auf beiden Seiten der Dichtungsplatte 100" Erhebungen, außerdem kann das Brennraum-Dichtelement 30" - wie in Fig. 4 gezeigt - mit einer Oberflächenprofilierung versehen werden, welche den Prägevorgang (nämlich die damit einhergehende Materialverdrängung) erleichtert und/oder Antireibverschleißmittel bildet. Zur Erleichterung des Prägevorgangs können auch die Abstütz-Erhebungen der vierten Ausführungsform mit Profilierungen versehen sein, wie dies in Fig. 4 bei der Abstütz-Erhebung 42" dargestellt wurde.

In Fig. 4 wurden schließlich strichpunktiert Beschichtungen 300 angedeutet, die insbesondere der sogenannten Mikroabdichtung dienen sollen, so daß kleinste Unebenheiten in den Motorbauteil-Dichtflächen nicht zu Undichtigkeiten führen können.

## Patentansprüche

1. Zylinderkopfdichtung zur Abdichtung eines von Motorbauteil-Dichtflächen mindestens eines Zylinderkopfs und eines Motorblocks begrenzten Dichtspalts, welche eine im wesentlichen metallische Dichtungsplatte mit mindestens einer Brennraumöffnung, Schraubenöffnungen für Zylinderkopfschrauben sowie mindestens einer Fluidöffnung aufweist, mit folgenden Merkmalen:
(a) die Dichtungsplatte (100) hat nur eine sich über die ganze Dichtungsplatte erstreckende Stahlblechlage;
(b) um die Brennraumöffnung (10, 12) herum ist ein Brennraum-Dichtelement (30) vorgesehen, das auf mindestens einer Seite der Zylinderkopfdichtung eine Erhebung mit einer nur diese Brennraumöffnung geschlossen umgebenden Dichtungs-Dichtfläche (32) zum Anpressen gegen mindestens eine der Motorbauteil-Dichtflächen bildet, deren Höhenprofil vor dem Einbau der Zylinderkopfdichtung zumindest ungefähr entsprechend der Topographie des sich bei zwischen Motorbauteil-Dichtflächen eingespannter Zylinderkopfdichtung ergebenden abzudichtenden Dichtspalts (Dichtspalttopographie) ausgebildet ist, wobei die Erhebung einen metallischen Grundkörper (34) aufweist, dessen Werkstoff derart ausgewählt und dessen Querschnitt derart gestaltet ist, daß der Grundkörper unter der maximalen, beim Einbau der Zylinderkopfdichtung sowie im Motorbetrieb auftretenden Belastung druck- und kriechfest und damit nicht höhenverformbar ist;
**dadurch gekennzeichnet, dass**
(c) für die mindestens eine Fluidöffnung (18, 20) ist die Dichtungsplatte (100) mit mindestens einer die Fluidöffnung geschlossen, umgebenden, in Richtung senkrecht zur Dichtungsplatte elastisch verformbaren Abdichtsicke (24, 26) versehen ist.

2. Zylinderkopfdichtung nach Anspruch 1, **dadurch gekennzeichnet, daß** der Grundkörper im Bereich der Dichtungs-Dichtfläche mit Antireibverschleißmitteln (200, 202) versehen ist.

3. Zylinderkopfdichtung nach Anspruch 2, **dadurch gekennzeichnet, daß** der Grundkörper im Bereich der Dichtungs-Dichtfläche mit einer Gleitschicht versehen ist.

4. Zylinderkopfdichtung nach Anspruch 2, **dadurch gekennzeichnet, daß** der Grundkörper im Bereich der Dichtungs-Dichtfläche mit einer die Gleitreibung gegenüber der benachbarten Motorbauteil-Dichtfläche erhöhenden Beschichtung versehen ist.

5. Zylinderkopfdichtung nach Anspruch 2, **dadurch gekennzeichnet, daß** der Grundkörper im Bereich der Dichtungs-Dichtfläche eine Oberflächenprofilierung (200, 202) zur Verhinderung einer Gleitbewegung gegenüber der benachbarten Motorbauteil-Dichtfläche aufweist.

6. Zylinderkopfdichtung nach Anspruch 5, **dadurch gekennzeichnet, daß** die Oberflächenprofilierung von die Brennraumöffnung ringförmig umschließenden Rippen (202) und Rillen (200) gebildet wird.

7. Zylinderkopfdichtung nach Anspruch 5 oder 6, **dadurch gekennzeichnet, daß** der Grundkörper im Bereich der Dichtungs-Dichtfläche mit einer die Oberflächenprofilierung nicht einebnenden, der Mikroabdichtung dienenden Beschichtung aus einem elastomeren Material versehen ist.

8. Zylinderkopfdichtung nach einem der vorstehenden Ansprüche, **dadurch gekennzeichnet, daß** die Metallblechlage mindestens im Bereich der Abdichtsicke (24, 26) aus einem Federstahlblech besteht.

9. Zylinderkopfdichtung nach einem der vorstehenden Ansprüche, **dadurch gekennzeichnet, daß** die Dichtungsplatte (100) im Abstand von der mindestens einen Brennraumöffnung (10, 12) und deren Brennraumdichtelement (30) mit wenigstens einer eine Abstützung für den Zylinderkopf und/oder den Motorblock bildenden Erhebung (40, 42, 44, 46; 22', 42') versehen ist.

10. Zylinderkopfdichtung nach Anspruch 9, **dadurch gekennzeichnet, daß** die Abstütz-Erhebung (40, 42, 44, 46; 22', 42') ein der Dichtspalt-Topographie entsprechendes Höhenprofil besitzt.

11. Zylinderkopfdichtung nach Anspruch 9 oder 10, **dadurch gekennzeichnet, daß** mindestens eine der Schraubenöffnungen (14, 16) mit einer Abstütz-Erhebung (22', 42') versehen ist.

12. Zylinderkopfdichtung nach einem der Ansprüche 9 bis 11, **dadurch gekennzeichnet, daß** im Bereich der Dichtungsplattenperipherie mindestens eine Abstütz-Erhebung (40, 42, 44, 46) vorgesehen ist.

13. Zylinderkopfdichtung nach einem der vorstehenden Ansprüche, **dadurch gekennzeichnet, daß** die Erhebung (30; 40, 42, 44, 46; 42', 22') von einem umgefalzten Bereich der Stahlblechlage gebildet wird.

14. Zylinderkopfdichtung nach einem der Ansprüche 1 bis 12, **dadurch gekennzeichnet, daß** die Erhebung (30) von einer mit der Stahlblechlage verbundenen Blechauflage (34) gebildet wird.

15. Zylinderkopfdichtung nach einem der Ansprüche 1 bis 12, **dadurch gekennzeichnet, daß** die Erhebung (30') von einem in eine Öffnung der Stahlblechlage eingelegten und mit letzterer verbundenen Metallring gebildet wird.

16. Zylinderkopfdichtung nach einem der Ansprüche 1 bis 12, **dadurch gekennzeichnet, daß** die Erhebung (30") von einem geprägten, verdickten Bereich der Stahlblechlage gebildet wird.

## Claims

1. Cylinder head gasket for sealing off a sealing gap delimited by engine component sealing surfaces of at least one cylinder head and an engine block, said cylinder head gasket comprising a substantially metallic gasket plate with at least one combustion chamber opening, screw openings for cylinder head screws and at least one fluid opening, with the following features:
(a) the gasket plate (100) has only one layer of sheet steel extending over the entire gasket plate;
(b) a combustion chamber sealing element (30) is provided around the combustion chamber opening (10, 12), said combustion chamber sealing element forming on at least one side of the cylinder head gasket an elevation with a gasket sealing surface (32) surrounding only this combustion chamber opening in a closed manner for being pressed against at least one of the engine component sealing surfaces, said gasket sealing surface having a height profile formed prior to installation of the cylinder head gasket so as to correspond at least approximately to the topography of the sealing gap to be sealed off as a result of clamping of the cylinder head gasket between engine component sealing surfaces (sealing gap topography), said elevation having a metallic main body (34) whose material is selected and whose cross section is designed such that the main body is pressure-resistant and creep-resistant and therefore not deformable in its height under the maximum load occurring with the cylinder head gasket installed and the engine operating;
**characterized in that**
(c) for the at least one fluid opening (18, 20), the gasket plate (100) is provided with at least one sealing bead (24, 26) surrounding the fluid opening in a closed manner and being elastically deformable in a direction perpendicular to the gasket plate.

2. Cylinder head gasket in accordance with claim 1, **characterized in that** the main body is provided with anti-abrasion means (200, 202) in the area of the gasket sealing surface.

3. Cylinder head gasket in accordance with claim 2, **characterized in that** the main body is provided with a slide layer in the area of the gasket sealing surface.

4. Cylinder head gasket in accordance with claim 2, **characterized in that** the main body is provided in the area of the gasket sealing surface with a coating which increases the sliding friction in relation to the adjacent engine component sealing surface.

5. Cylinder head gasket in accordance with claim 2, **characterized in that** the main body has in the area of the gasket sealing surface a surface profile (200, 202) for preventing sliding movement in relation to the adjacent engine component sealing surface.

6. Cylinder head gasket in accordance with claim 5, **characterized in that** the surface profile is formed by ribs (202) and grooves (200) enclosing the combustion chamber opening in the shape of rings.

7. Cylinder head gasket in accordance with claim 5 or 6, **characterized in that** the main body is provided in the area of the gasket sealing surface with a coating consisting of an elastomeric material for microsealing purposes, which does not level the surface profile.

8. Cylinder head gasket in accordance with any one of the preceding claims, **characterized in that** the sheet metal layer consists of a sheet of spring steel at least in the area of the sealing bead (24, 26).

9. Cylinder head gasket in accordance with any one of the preceding claims, **characterized in that** the gasket plate (100) is provided at a distance from the at least one combustion chamber opening (10, 12) and its combustion chamber sealing element (30) with at least one elevation (40, 42, 44, 46; 22', 42') forming a support for the cylinder head and/or the engine block.

10. Cylinder head gasket in accordance with claim 9, **characterized in that** the supporting elevation (40, 42, 44, 46; 22', 42') has a height profile corresponding to the topography of the sealing gap.

11. Cylinder head gasket in accordance with claim 9 or 10, **characterized in that** at least one of the screw openings (14, 16) is provided with a supporting elevation (22', 42').

12. Cylinder head gasket in accordance with any one of claims 9 to 11, **characterized in that** at least one supporting elevation (40, 42, 44, 46) is provided in the area of the periphery of the gasket plate.

13. Cylinder head gasket in accordance with any one of the preceding claims, **characterized in that** the elevation (30; 40, 42, 44, 46; 42', 22') is formed by a folded-over area of the layer of sheet steel.

14. Cylinder head gasket in accordance with any one of claims 1 to 12, **characterized in that** the elevation (30) is formed by an overlay (34) of sheet metal joined to the layer of sheet steel.

15. Cylinder head gasket in accordance with any one of claims 1 to 12, **characterized in that** the elevation (30') is formed by a metal ring which is placed in an opening in the layer of sheet steel and joined thereto.

16. Cylinder head gasket in accordance with any one of claims 1 to 12, **characterized in that** the elevation (30") is formed by a stamped, thickened area of the layer of sheet steel.

## Revendications

1. Joint de culasse pour colmater un jeu d'étanchéité délimité par des surfaces d'étanchéité de composant de moteur d'au moins une culasse et d'un bloc moteur, ledit joint de culasse présentant une plaque d'étanchéité substantiellement métallique avec au moins un orifice de chambre de combustion, des orifices de vis pour des vis de culasse, ainsi qu'avec au moins un orifice de fluide, et ayant les particularités suivantes :
a) la plaque d'étanchéité (100) ne présente qu'une seule couche de tôle d'acier s'étendant sur toute la plaque d'étanchéité ;
b) autour de l'orifice de chambre de combustion (10, 12), un élément d'étanchéité de chambre de combustion (30) est prévu qui forme sur au moins un côté du joint de culasse un bossage avec une surface d'étanchéité de joint (32) entourant entièrement uniquement cet orifice de chambre de combustion pour s'appliquer contre au moins l'une des surfaces d'étanchéité de composant de moteur, dont le profil en hauteur avant la mise en place du joint de culasse est réalisé au moins approximativement selon la topographie du jeu d'étanchéité (topographie de jeu d'étanchéité) à colmater qui résulte lorsque le joint de culasse est serré entre les surfaces d'étanchéité de composant de moteur, dans lequel le bossage présente un corps de base métallique (34) dont le matériau est sélectionné et dont la section transversale est conformée de telle sorte que le corps de base, sous la charge maximale présente lors de la mise en place du joint de culasse ainsi qu'en cours de fonctionnement du moteur, résiste à la pression et aux fuites et n'est donc pas déformable en hauteur ;
**caractérisé en ce que**
c) pour ledit au moins un orifice de fluide (18, 20), la plaque d'étanchéité (100) est munie d'au moins une moulure de colmatage (24, 26) entourant entièrement l'orifice de fluide et à déformation élastique dans la direction perpendiculaire à la plaque d'étanchéité.

2. Joint de culasse selon la revendication 1,
**caractérisé en ce que** le corps de base est muni de moyens anti-érosion (200, 202) au niveau de la surface d'étanchéité de joint.

3. Joint de culasse selon la revendication 2,
**caractérisé en ce que** le corps de base est muni d'une couche de glissement au niveau de la surface d'étanchéité de joint.

4. Joint de culasse selon la revendication 2,
**caractérisé en ce que** le corps de base est muni au niveau de la surface d'étanchéité de joint d'un revêtement augmentant la friction de glissement par rapport à la surface d'étanchéité de composant de moteur adjacente.

5. Joint de culasse selon la revendication 2,
**caractérisé en ce que** le corps de base présente au niveau de la surface d'étanchéité de joint un profilage de surface (200, 202) pour empêcher un mouvement de glissement par rapport à la surface d'étanchéité de composant de moteur adjacente.

6. Joint de culasse selon la revendication 5,
**caractérisé en ce que** le profilage de surface est formé par des nervures (202) et des rainures (200) entourant l'orifice de chambre de combustion de façon annulaire.

7. Joint de culasse selon la revendication 5 ou 6, **caractérisé en ce que** le corps de base est muni au niveau de la surface d'étanchéité de joint d'un revêtement en matériau élastomère, n'aplanissant pas le profilage de surface et servant au micro-colmatage.

8. Joint de culasse selon l'une quelconque des revendications précédentes, **caractérisé en ce que** la couche de tôle métallique se compose au moins au niveau de la moulure de colmatage (24, 26) d'une tôle d'acier à ressorts.

9. Joint de culasse selon l'une quelconque des revendications précédentes, **caractérisé en ce que** la plaque d'étanchéité (100) est munie à distance dudit au moins un orifice de chambre de combustion (10, 12) et de son élément d'étanchéité de chambre de combustion (30) d'au moins un bossage (40, 42, 44, 46 ; 22', 42') formant un soutien pour la culasse et/ou le bloc moteur.

10. Joint de culasse selon la revendication 9,
**caractérisé en ce que** le bossage de soutien (40, 42, 44, 46 ; 22', 42') possède un profil de hauteur correspondant à une topographie de jeu d'étanchéité.

11. Joint de culasse selon la revendication 9 ou 10, **caractérisé en ce qu'**au moins l'un des orifices de vis (14, 16) est muni d'un bossage de soutien (22', 42').

12. Joint de culasse selon l'une quelconque des revendications 9 à 11, **caractérisé en ce qu'**au niveau de la périphérie de plaque d'étanchéité, au moins un bossage de soutien (40, 42, 44, 46) est prévu.

13. Joint de culasse selon l'une quelconque des revendications précédentes, **caractérisé en ce que** le bossage (30 ; 40, 42, 44, 46 ; 42', 22') est formé par une zone sertie de la couche de tôle d'acier.

14. Joint de culasse selon l'une quelconque des revendications 1 à 12, **caractérisé en ce que** le bossage (30) est formé par une couche rapportée de tôle (34) reliée à la couche de tôle d'acier.

15. Joint de culasse selon l'une quelconque des revendications 1 à 22, **caractérisé en ce que** le bossage (30') est formé par un anneau métallique inséré dans un orifice de la couche de tôle d'acier et relié à cette dernière.

16. Joint de culasse selon l'une quelconque des revendications 1 à 12, **caractérisé en ce que** le bossage (30") est formé par une zone gaufrée, épaissie de la couche de tôle d'acier.
